# EUROPÄISCHE PATENTSCHRIFT

(11) **EP 1 329 253 B1**
(45) Veröffentlichungstag und Bekanntmachung des Hinweises auf die Patenterteilung: **23.08.2006**
(21) Anmeldenummer: 03090014.6
(22) Anmeldetag: 17.01.2003
(51) Int. Cl.: B01D 53/14, B01D 53/18

(54) **Verfahren und Anlage zur Aufbereitung von Bio- und Naturgasen**
Process and apparatus for treating biogas and natural gas
Procédé et dispositif pour traiter des biogaz et de gaz naturel

(30) Priorität: 18.01.2002 DE 10202010
(43) Veröffentlichungstag der Anmeldung: 23.07.2003
(73) Patentinhaber: Bonso, Bernd, 12555 Berlin (DE); Ludwig, Hans-Walter, 15831 Mahlow (DE); Rickert, Ingo, 13053 Berlin (DE); Ruppert, Ulrich, 12439 Berlin (DE)
(72) Erfinder: Bonso, Bernd, 12555 Berlin (DE); Ludwig, Hans-Walter, 15831 Mahlow (DE); Rickert, Ingo, 13053 Berlin (DE); Ruppert, Ulrich, 12439 Berlin (DE)
(74) Vertreter: Reimann, Wolfgang

(56) Entgegenhaltungen:
- DE-A- 3 634 526
- DE-A- 19 937 902
- US-A- 3 823 222
- US-A- 5 820 837
- US-B1- 6 174 440

## Beschreibung

Die Erfindung beinhaltet ein Verfahren und eine Anlage zur Aufbereitung von vorzugsweise CH-haltigen Gasen besonders Bio- und Naturgasen durch Reinigung und Komprimierung zum Zwecke einer kontinuierlichen Bereitstellung oder temporären Speicherung.

### Stand der Technik

Alle bisherigen Systeme der Komprimierung und Reinigung von Gasen und

Gasverbindungen arbeiten neben oder hintereinander. Beim Komprimieren kommen herkömmliche Kompressoren mit Kolben-, Schrauben-, Membranverdichter, ebenso Rotations- oder Zentrifugalverdichter zum Einsatz, die keinerlei Kühlung, Reinigung oder Trennung/ Absorbtion von Gasen durchführen.

Auf der anderen Seite werden Reinigungsverfahren mittels Flüssigkeiten im Gegenstrom- (Firma Lurgi u.a.) oder anderen Vermischungssystemen eingesetzt, ohne daß hier eine Verdichtung des Nutz- oder Zielgases erreicht wird.

Eine Abtrennung von Gasen mittels Zeolithen oder Aktivkohle oder anderen katalytischen Stoffen erfolgt ohne die Nutzung einer Arbeitsflüssigkeit oder eine Kommpression des Gases.

Auch die speziellen Druckwechsel-Absorbtionsanlagen werden nur genutzt, um Gase abzuspalten, nicht aber um sie zu komprimieren.

Die speziellen Vor- oder Nachteile der bekannten Verfahren ergeben sich aus ihren speziellen technischen Eigenschaften. So ist das Verdichten von Gasen mittels Kolben oder Rotation durch die vielfachen Energieformenänderungen mit erheblichen Verlusten durch Reibung, Temperatur- und Richtungsänderung verbunden.

Bei Reinigungsverfahren mit einer Waschflüssigkeit werden größere Pumpenleistungen benötigt, um die Vermischung des Gases zu erzielen. Die höhere Lösungsfähigkeit von Gasen in Flüssigkeiten unter erhöhtem Druck wird auch hier ebenso wie bei Molsieb-, Zeolithe- oder Aktivkohle-Absorbierungen der Gase nicht genutzt.

In der Europäischen Patentschrift EP 0 920 902 B1 (USP 6 174 440) ist ein Verfahren und die dazu gehörige Vorrichtung zur Kompression und Fraktionierung beschrieben, die zum Ziel hat, aus einem Gasgemisch die reinere Kohlenwasserstofffraktion von den sauren Gasen zu trennen und damit zurückzugewinnen.

Vorrichtung für den Gastrennungsprozeß wird eine Zweiphasenkompressionseinrichtung beschrieben, die eine rotodynamische Pumpe umfasst, die wenigstens einen Impeller und wenigstens einen Diffusor aufweist.

Die Aufgabe der Erfindung besteht in der Ausarbeitung eines Verfahrens zur Aufbereitung von vorzugsweise CH-haltigen Gasen durch Reinigung und Komprimierung zum Zwecke einer kontinuierlichen Einspeisung oder einer temporären Speicherung sowie in einem Vorschlag von dafür geeignete technische Anlagen, die die bisherigen Nachteile der Gasaufbereitung und Speicherung besonders für kleine Gasmengen überwinden und so für dezentrale Anlagen kleiner Leistung besonders geeignet sind.

Die Verfahrenslösung und die technischen Anlagen dafür beziehen sich besonders auf Biogase und andere Naturgase. Die Reinigung, Komprimierung und Speicherung der Gase soll dabei dem jeweiligen Verwendungszweck angepaßt werden können. Die Gestaltung der technischen Anlagen ist so vorzunehmen, daß eine kontinuierliche, aber auch eine periodische Gasabnahme abhängig von der Anlage möglich ist.

Die erfindungsgemäße Lösung der Aufgabenstellung bezüglich des Verfahrens besteht in der Weiterentwicklung der technischen Lösung der Komprimierung von Gasen in Behältern mittels Flüssigkeiten, wie in der OS 44 30 716 beschrieben. Diese erfindungsgemäße Weiterentwicklung beinhaltet die Verbindung von Komprimierung und Reinigung des Gases während des Komprimierungsvorganges im Verdichtungs-/Reinigungsbehälter durch Einsatz eines geeigneten Fluids für die Komprimierung und

Entfernung der gewünschten Substanzen aus dem Gas. Die Zuführung des Fluids in den Verdichtungs-/Reinigungsbehälter wird dabei verfahrensmäßig und konstruktiv so gestaltet, daß eine optimale Reinigung des Gases über das Fluid erfolgt. Die Entfernung der vom Fluid aufgenommenen Substanzen erfolgt durch Reinigung des Fluids außerhalb der Verdichtungs-/Reinigungsbehälter mit dem Ziel der Wiederverwendung des Fluids in einen Kreislauf. Eine weitere erfindungsgemäße Lösung betrifft die kontinuierliche Komprimierung und Reinigung des Gases durch mehrere parallel bzw. auch in Reihe geschaltete Verdichtungs-/Reinigungsbehälter und die Steuerung des Gasstromes durch diese Verdichtungs-/Reinigungsbehälter mit anschließender, kontinuierlicher Entnahme oder temporären Speicherung des gereinigten Gases.

Die Lösungsfähigkeit und die Bindungseigenschaften von Gasen in Flüssigkeiten (Fluid) verändern sich unter erhöhtem Druck und Temperatur und der Dichte der Flüssigkeiten (Fluid) in bekannter Weise erheblich. Diese physikalisch-chemische Eigenschaft von Gasen in Flüssigkeiten wird mit der Komprimierung des Gases nach dem erfindungsgemäßen Verfahren verbunden und so für eine optimale Reinigung des Gases genutzt.

Die Auswahl des Verdichtungs- und Reinigungsfluids erfolgt unter diesen Gesichtspunkten, ergänzt um die Möglichkeit der Entfernung bzw. Rückgewinnung der ausgewaschenen Gasbestandteile aus dem Verdichtungs- und Reinigungsfluid. So nehmen z.B. Glykole als dichte, hochmolekulare Flüssigkeiten bei Druck unter 300 bar nur geringe Mengen CH₄ auf und lassen sich damit vorteilhaft zum Verdichten sowie Reinigen des Methangases von H₂0 (Feuchtigkeit) und CO₂ (Kohlensäure) nutzen.

Mit dem Hintereinanderschalten von mehreren Verdichtungs-/Reinigungsbehättern, wie im Beispiel beschrieben, können mittels verschiedener Verdichtungs-/Reinigungsfluids auf die jeweils zu entfernenden Gaskomponente abgestimmt, Bio- und Naturgase mit den jeweils optimalen Gaszusammensetzungen dem Verbraucher bereitgestellt werden.

Mit der vorgeschlagenen technischen Lösung der Komprimierung und Reinigung von Gasen ist auch die Reinigung und Aufbereitung von Deponiegasen zur problemlosen energetischen Nutzung auf Grund der großen Variabilität der einzusetzenden Verdichtungs- und Reinigungsfluide ohne teuere und technisch aufwendige Anlagen möglich.

### Beispiel

### Arbeitsschritt 1

Durch die Zuführungsleitung A wird Naturgas nach Passieren eines hydraulisch wirkenden Rückschlagventiles in den mit der Arbeits- und Reinigungsflüssigkeit (im nachfolgenden Fluid genannt) gefüllten Verdichtungs-/Reinigungsbehälter I in der Form eingeleitet, damit das Gas durch kleinste Bläschengröße mit einer größtmöglichen Oberfläche Kontakt mit dem Fluid erhält und durch Verdrängung des Fluids aus Verdichtungs-/Reinigungsbehälter I über die Leitung D₁;- D₆ in den Vorratsbehälter zurückfließt oder durch Absaugen des Fluids durch den entstehenden Unterdruck das Naturgas in den Verdichtungs-/Reinigungsbehälter I einströmt.

### Arbeitsschritt 2

Nach Erreichen des unteren Flüssigkeitsspiegels des im 1. Arbeitsschritt beschriebenen Vorgangs schließt sich das Ventil D₁ durch den Dichteunterschied, wodurch der Arbeitsschritt 1 im Verdichtungs-/Reinigungsbehälter II und danach in Verdichtungs-/Reinigungsbehälter III in gleicher Art beginnen und mit Schließen von D₂;-D₃ abschließen kann.

### Arbeitsschritt 3

Mit Beginn des Arbeitsschritts 2 beginnt die Pumpe P1 mit dem Füllen des Verdichtungs-/Reinigungsbehälters I über die Leitung L1 mit einem im oberen Teil des Verdichtungs-/Reinigungsbehälters I angebrachten Sprühkopf, wodurch durch den entstehenden Sprühnebel und die dadurch entstehende Durchmischung von Naturgas und Fluid Bestandteile und / oder Verunreinigungen des Gases in das Fluid überführt werden, von diesem aufgenommen oder an dieses gebunden werden. Durch die damit verbundene Füllstandserhöhung wird das Naturgas auf ein höheres Druckniveau geführt, bis der obere mogliche Flüssigkeitsstand mit Erreichen des gewünschten Drucks hergestellt wird und mit Ventil E₁;- E₆ die Fluidzufuhr beendet wird.

### Arbeitsschritt 4

Nach Durchführung des 3. Arbeitsschrittes wird durch Öffnen des oberen Gasventils F₁ das komprimierte Gas durch Zuleitung des Fluids über die jeweilig untere Zuführungsleitung und die hydraulisch wirkenden Ventile G₁;- G₆ von der Pumpe P1/P2 über die Leitung B1/B2 zum Speichertank des Verbrauchers oder in einen speziellen Speichertank oder in eine zweite Reinigungsstufe gedrückt, bis das obere Füllstandsventil F₁;-F₆ ein Eindringen des Fluids in die Gasleitung B verhindert oder wie im 5. Arbeitsschritt beschrieben weiter verfahren wird.

### Arbeitsschritt 5

Ist die geforderte Reinigung nicht in dem Maße erfolgt, wie gewünscht, oder durch die Wahl des Fluids in den ersten 4 Reinigungsschritten nicht erreichbar, weil dessen chemische oder physikalische Eigenschaften hierzu nicht geeignet sind, werden in einem Verdichtungs-/Reinigungsbehälter la und IIa usw. mit einem anderen Fluid, das für den jeweilig gewünschten Reinigungsfall geeignet ist, die Arbeitsschritte 1 - 4 wiederholt, wobei nunmehr zusätzlich die speziellen Bindungseigenschaften von unter Druck stehenden Flüssigkeiten und Gasen genutzt werden und mit einer weiteren Kompression verbunden werden. Die Anzahl der Verdichtungs-/Reinigungsbehälter II und IIa richten sich nach der zum Füllen des jeweiligen Verdichtungs-/Reinigungsbehälters I oder la benötigten Zeit. Der sich aus Zeit mal Volumen ergebende Volumenstrom entspricht der benötigten Pumpenleistung.

### Bezugszeichen

- A: Zuführungsleitung
- C₁;- C₆: Rückschlagventile
- I - III: Verdichtungs-/Reinigungsbehälter
- Ia - IIIa: Verdichtungs-/Reinigungsbehälter
- D₁;- D₆: Rückflussleitung zum Vorratsbehälter mit Ventile
- P1, P2: Pumpe für Verdichtungs-/Reinigungsflüssigkeit
- L₁;- L₆: Zuleitung für Sprühkopf für Verdichtungs-/Reinigungsflüssigkeit
- E₁;- E₆: Druckeinlassventile für die Verdichtungs-/Reinigungsflüssigkeit
- F₁;- F₆: Gasfüllstandsventile
- B1 - B2: Zuleitung zum Verbraucher/Speicher
- G₁;- G₆: Ein- und Auslassventile für die Verdichtungs-/Reinigungsflüssigkeit

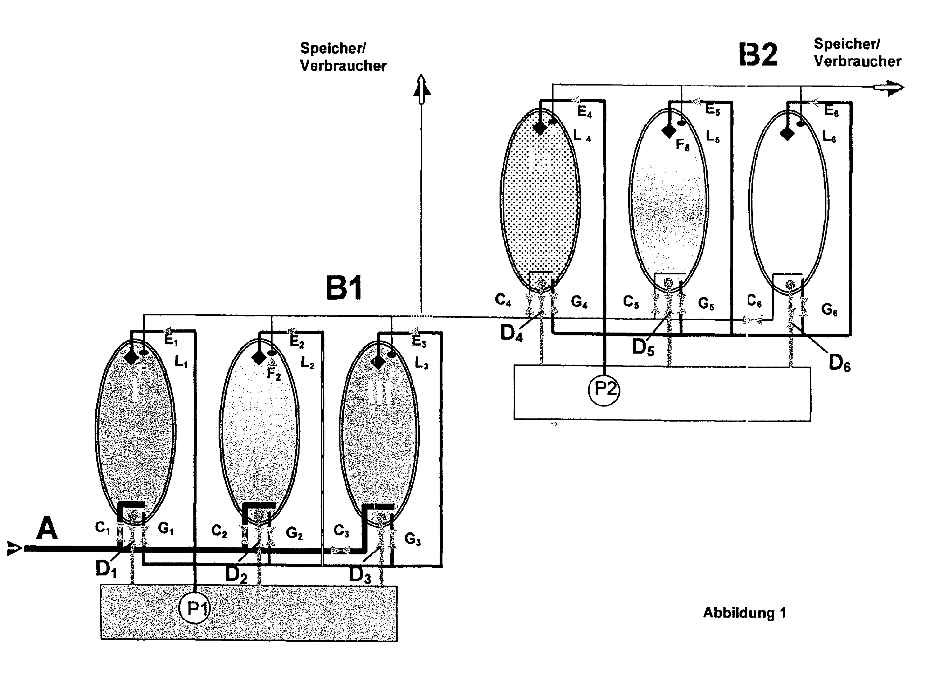

## Patentansprüche

1. Verfahren zur Komprimierung und gleichzeitigen Reinigung von Bio- und Naturgasen in einem Behälter, **dadurch gekennzeichnet, dass** das Bio- oder Naturgas zuerst in den Verdichtungs-/Reinigungsbehälter durch das im Verdichtungs-/Reinigungsbehälter vorhandene Verdichtungs-/Reinigungsfluids durch eine *am Boden befindliche Einströmöffnung geleitet wird* und das Verdichtungs-/Reinigungsfluid verdrängt und anschließend durch Einsprühen des zuvor verdrängten Verdichtungs-/Reinigungsfluids in den Verdichtungs-/Reinigungsbehälter weiter gereinigt und komprimiert und durch weitere Zuführung des Verdichtungs-/Reinigungsfluid auf den gewünschten Kompressionsdruck gebracht wird.

2. Verfahren zur Komprimierung und gleichzeitigen Reinigung von Bio- und Naturgasen nach Anspruch 1 **dadurch gekennzeichnet, daß** das Verdichtungs-/Reinigungsfluid hinsichtlich seiner gaslösenden Eigenschaften nach den aus den Gasen zu entfernenden Bestandteilen vorrangig bestimmt wird.

3. Verfahren zur Komprimierung und gleichzeitigen Reinigung von Bio- und Naturgasen nach Anspruch 1 **dadurch gekennzeichnet, daß** die Reinigung und Komprimierung von Bio- und Naturgas über mehrere in Reihe geschaltete Verdichtungs-/Reinigungsbehälter erfolgt.

4. Das Verfahren nach den Ansprüchen 1 - 3 ist auch zur Komprimierung und gleichzeitigen Reinigung von Deponiegasen geeignet, **dadurch gekennzeichnet, dass** in den in Reihe geschalteten Verdichtungs-/Reinigungsbehälter für die Entfernung der verschiedenen unerwünschten Gasanteile unterschiedlich geeignete Verdichtungs-/Reinigungsfluide verwendet werden.

5. Vorrichtung zur Durchführung des Verfahrens nach den Ansprüchen 1 - 4 **dadurch gekennzeichnet, dass** diese aus
- einem Verdichtungs-/Reinigungsbehälter mit den ventilgesteuerten Zuleitungen C₁;-C₆ *am Boden des Verdichtungs-*/*Reinigungsbehälters,*
- einem im oberen Teil des Verdichtungs-/Reinigungsbehälters angeordneten Sprühkopf zum Einsprühen des Verdichtungs-/Reinigungsfluid,
- eine Pumpe, die über die Ventile E₁;- E₆ mit dem Sprühkopf sowie über die Ventile G₁;- G₆ mit dem Verdichtungs-/Reinigungsbehälter verbunden ist,
- den Ventilen F₁;- F₆ für die Gasentnahme aus den Verdichtungs-/Reinigungsbehälter,
- den Ventilen D₁;- D₆ *für das Entleeren der Verdichtungs*-/*Reinigungsbehälter mit Verdichtungs-*/*Reinigungsfluid*
- *einen Wärmetauscher zur Kühlung des Verdichtungs-*/*Reinigungsfluids*
- *einen Sammelbehälter zur Aufnahme des Verdichtungs-*/ *Reinigungsfluids,*
besteht.

## Claims

1. Procedure for the compression and simultaneous cleaning of biogases and natural gases in a container, **characterized in that** the biogas or natural gas is first diverted into the compression/cleaning container by the compression/cleaning fluids present in the compression/cleaning container through an inlet port located on the bottom and displaces the compression/cleaning fluid and then is additionally cleaned and compressed due to the injection of the previously displaced compression/cleaning fluid into the compression/ cleaning container and is brought to the desired compression pressure by additional introduction of the compression/cleaning fluid.

2. Procedure for the compression and simultaneous cleaning of biogases and natural gases in accordance with Claim 1 **characterized in that** the compression/ cleaning fluid is primarily determined in accordance with the components to be removed from the gases with regard to its gas-dissolving characteristics.

3. Procedure for the compression and simultaneous cleaning of biogases and natural gases in accordance with Claim 1 **characterized in that** the cleaning and compression of biogas and natural gas is performed by means of a series of several compression/cleaning containers.

4. The procedure in accordance with Claims 1 - 3 is also suitable for the compression and simultaneous cleaning of landfill gases, **characterized in that** various suitable compression/cleaning fluids are used in the series of several compression/cleaning containers for the removal of the various undesirable gas portions.

5. Device for performing the procedure in accordance with Claims 1 - 4 **characterized in that** this consists of
- a compression/cleaning container with the valve-controlled supply lines C₁;- C₆ on the bottom of the compression/cleaning container,
- a sprayer head located in the upper part of the compression/cleaning container for the injection of the compression/ cleaning fluid,
- a pump, which is connected to the sprayer head by means of the valves E₁;- E₆ and to the compression/cleaning container by means of the valves G₁;- G₆,
- the valves F₁;- F₆ for the removal of gas from the compression/cleaning container,
- the valves D₁;- D₆ for emptying the compression/ cleaning container with compression/cleaning fluid,
- a heat exchanger for cooling the compression/cleaning fluid,
- a collection tank for collecting the compression/ cleaning fluid.

## Revendications

1. Procédé pour la compression et la purification simultanée de gaz biologiques et naturels dans un réservoir, **caractérisé en ce que** le gaz biologique ou naturel est d'abord amené dans le réservoir de compression/purification au travers du fluide de compression/purification existant dans le réservoir de compression/purification par une ouverture d'admission disposée sur le fond, **en ce qu'**il refoule le fluide de compression/purification et **en ce qu'**il est ensuite purifié et comprimé par nébulisation dans le réservoir de compression/purification du fluide de compression/purification précédemment refoulé, et amené à la pression de compression souhaitée par nouvelle amenée du fluide de compression/purification.

2. Procédé pour la compression et la purification simultanée de gaz biologiques et naturels selon la revendication 1, **caractérisé en ce que**. Le fluide est choisi en fonction de ses propriétés de dissolution gazeuse pertinentes pour lé composant gazeux à supprimer du mélange gazeux (critère prioritaire).

3. Procédé pour la compression et la purification simultanée de gaz biologiques et naturels selon la revendication 1, **caractérisé en ce que** la purification et la compression de gaz biologique et naturel est effectuée au moyen de plusieurs réservoirs de compression/purification montés en série.

4. Procédé selon les revendications 1 à 3, également approprié à la compression et à la purification simultanée de gaz de décharge, **caractérisé en ce que** des fluides de compression/purification différemment appropriés sont utilisés dans les réservoirs de compression/purification montés en série pour la suppression des diverses fractions gazeuses indésirables.

5. Dispositif pour l'exécution du procédé selon les revendications 1 à 4, **caractérisé en ce que** celui-ci se compose
- d'un réservoir de compression/purification avec les conduites d'amenée commandées par des vannes C₁;- C₆ sur le fond du réservoir de compression/purification,
- d'une tête de pulvérisateur pour la nébulisation du fluide de compression/purification, disposée dans la partie supérieure du réservoir de compression/purification,
- d'une pompe reliée à la tête de pulvérisateur par les vannes E₁;- E₆, et au réservoir de compression/purification par les vannes G₁;- G₆,
- des vannes F₁;- F₆ pour le soutirage de gaz du réservoir de compression/purification,
- des vannes D₁;- D₆ pour la vidange du réservoir de compression/purification avec le fluide de compression/purification,
- d'un échangeur de chaleur pour le refroidissement du fluide de compression/purification,
- d'un réservoir collecteur pour le stockage du fluide de compression/purification.
